# EUROPEAN PATENT SPECIFICATION

(11) **EP 4 483 560 B1**
(45) Date of publication and mention of the grant of the patent: **04.06.2025**
(21) Application number: 23725492.5
(22) Date of filing: 25.04.2023
(51) Int. Cl.: H04L 67/146, H04L 67/50, G06F 21/62, G06Q 30/0251, H04L 9/40

(54) **PRIVACY-PRESERVING ATTRIBUTE PREDICTION AND CONTENT SELECTION**
DATENSCHUTZBEWAHRENDE ATTRIBUTVORHERSAGE UND INHALTSAUSWAHL
PRÉDICTION D'ATTRIBUT PRÉSERVANT LA CONFIDENTIALITÉ ET SÉLECTION DE CONTENU

(43) Date of publication of application: 01.01.2025
(73) Proprietor: Google LLC, Mountain View, CA 94043 (US)
(72) Inventor: AVERY, Steven Guy, Mountain View, California 94043 (US); MAYOROV, Alexander E., Mountain View, California 94043 (US); ANAND, Rishav, Mountain View, California 94043 (US)
(74) Representative: Marks & Clerk GST
(86) International application number: PCT/US2023/019781
(87) International publication number: WO 2024/226034

(56) References cited:
- US-A1- 2023 004 674
- MAJEED ABDUL ET AL: "Anonymization Techniques for Privacy Preserving Data Publishing: A Comprehensive Survey", IEEE ACCESS, IEEE, USA, vol. 9, 18 December 2020 (2020-12-18), pages 8512 - 8545, XP011831182, DOI: 10.1109/ACCESS.2020.3045700

## Description

### TECHNICAL FIELD

This specification relates to data privacy, data security, and machine learning.

### BACKGROUND

Data security and user privacy are vital in systems and devices connected to public networks, such as the Internet. The enhancement of user privacy has led many developers to change the ways in which user data is handled. For example, some browsers are planning to deprecate the use of third-party cookies.

US2023004674A1 describes a method for maintaining user privacy in advertisement networks may include receiving first persona data associated with a first user from at least one publisher system. The first persona data may be generalized to form first generalized persona data. A session key may be generated. The first generalized persona data and the session key may be encrypted with a first public key of an advertisement network system to form a first ciphertext. The first ciphertext and first user identity data may be communicated to a mediator system. The first user identity data may be associated with first user's identity. A first encrypted targeted advertisement may be received based on the first generalized persona data from the advertisement network system via the mediator system. The first encrypted targeted advertisement may be decrypted with the session key to form a first targeted advertisement. A system and computer program product are also disclosed.

"Anonymization Techniques for Privacy Preserving Data Publishing: A Comprehensive Survey" describes systematically categorizing existing anonymization techniques into relational and structural anonymization, and present an up to date thorough review on existing anonymization techniques and metrics used for their evaluation.

### SUMMARY

This specification describes technologies that enable the selection of content relevant to a user without compromising user privacy or data security. To select relevant content while enhancing user privacy, content platforms can predict which user attribute buckets are relevant to a user. A user attribute can describe any characteristic of a user, such as age, education, shoe size, and so on. A user attribute bucket is a value or range of values for the characteristic. For example, the age ranges "18 to 24" and "25 to 34" are user attribute buckets for the age range attribute, which is a type of attribute. Users are assigned to user attribute buckets based on individual interactions between the user and the content platform and/or its affiliates, and not based on user tracking across resources of multiple different content platforms or different domains. Instead, a content platform can predict, for each individual request for content received from a client device of a user, one or more user attribute buckets for the user based on the request and contextual data received with the request. The content platform can then request that the client device update information stored at the client device that is related to user attribute buckets specific to that content platform.

Each content platform can use information that is related to user attribute bucket predictions, and that is stored at the client device, to eliminate or limit what content is selected for a user, and, in some cases, the information can be used to determine preferred content. In some cases, provider-specific logic available to the client device can also be used when determining content. As users interact repeatedly with the content platform and/or its affiliates, predictions relating to user attribute buckets are reinforced, and the confidence of the user's attribute predictions can increase. Since each content platform's user attribute bucket information for a user is stored at the client device of the user, no entity outside of the client device has access to cross site data (e.g., information about the user's activity across multiple web sites published by different publishers), thereby enhancing user privacy.

In general, one innovative aspect of the subject matter described in this specification can be embodied in methods including the operations of receiving, from a client device of a user and by a content platform, a digital component request that requests one or more digital components for display at the client device and that includes contextual data related to an environment in which the digital component will be displayed; assigning, by the content platform and based on the contextual data, the user to one or more user attribute buckets, wherein each of the one or more user attribute buckets is associated with at least one type of user attribute and corresponds to a particular value or value range for the type of user attribute; selecting, based on the contextual data and each user attribute bucket to which the user is assigned, multiple candidate digital components for distribution to the client device; and providing, by the content platform and to the client device, digital component response data that (i) initiates an update, based on each user attribute bucket to which the user is assigned, to aggregated user attribute data for the user stored at the client device and (ii) enables the client device to select, from among the multiple candidate digital components, a given digital component to display to the user based on the aggregated user attribute data, wherein the digital response data includes the plurality of digital components and data indicating each user attribute bucket to which the user is assigned. Other implementations of this aspect include corresponding apparatus, systems, and computer programs, configured to perform the aspects of the methods, encoded on computer storage devices.

These and other implementations can each optionally include one or more of the following features. In one aspect, the digital component response data includes, for each user attribute bucket to which the user is assigned, a confidence score that indicates a confidence in a prediction that an actual user attribute of the user matches the particular value or is within a value range corresponding to the user attribute bucket.

In some aspects, the aggregated user attribute data for the user stored at the client device includes user attribute buckets to which the user is assigned in response to multiple digital component requests and based on respective digital component response data received in response to the plurality of digital component requests.

In some aspects, the digital component response data includes a filter logic module that includes executable instructions configured to produce a confidence score that indicates a confidence in a prediction that an actual user attribute of the user matches the particular value or is within a value range corresponding to the user attribute bucket. The filter logic processes the aggregated user attribute data at the client device to produce a respective confidence score for each of a plurality of user attribute buckets.

In some aspects, the digital component response data includes a reference to a filter logic module located on a separate computing system that is configured to produce a confidence score that indicates confidence in a prediction that an actual user attribute of the user matches the particular value or is within a value range corresponding to the user attribute bucket. The filter logic processes the aggregated user attribute data at the client device to produce a respective confidence score for each of a plurality of user attribute buckets.

In some aspects, the client device is configured to determine, for each of a plurality of user attribute buckets, a membership measure based on a number of times that the user has been assigned to the user attribute bucket. The client device can be configured to determine, for each of a plurality of user attribute buckets, a confidence that score that indicates a confidence in a prediction that an actual user attribute of the user matches the particular value or is within a value range corresponding to the user attribute bucket based at least in part based on the membership measure for the user attribute bucket. The client device selects a given digital component to display to the user based at least in part based on the membership measure for each user attribute bucket.

In some aspects, the contextual data includes at least one of coarse location information of the client device or data identifying a resource with which the given digital component will be displayed.

Particular embodiments of the subject matter described in this specification can be implemented so as to realize one or more of the following advantages. Using the techniques described in this specification, user specific information that may be useful in selecting content for a user and/or for removing some content from consideration, is maintained on the user's client device, where its use can be controlled by the user. In addition, content platforms can supply proprietary filter logic that can be applied at the client device or at a trusted server to filter content before it is considered for display to a particular user based on predictions relating to user attributes. Therefore, using the techniques of this specification, information is displayed to users that is likely to be relevant to the user without compromising the user's privacy. In addition, as a user continues to interact with a content platform, confidence in predictions can increase, improving the likelihood that relevant content is displayed.

Historically, third-party cookies (e.g., cookies from a different domain than the resource being rendered by a client device) have been used to collect data from client devices across the Internet. However, some browsers and device platforms block the use of third-party cookies and third-party cookies are increasingly being removed from use, thereby preventing the collection of data using third party cookies. This creates a challenge when attempting to utilize collected data to make inferences, segment data, or otherwise utilize data to enhance online browsing experiences, e.g., by selecting content relevant to users based on the data collected using third party cookies. In other words, without the use of third-party cookies, much of the data previously collected is no longer available, which prevents computing systems from being able to use that data to group users based on shared user attributes or activities performed by the users at particular web pages or other resources, to enhance the online experience for users, and/or to display relevant content to users.

The techniques described herein can solve hurdles that may arise from the eradication of third-party cookies. For example, content platforms can add a user to one or more user attribute buckets each time a request for content is sent to the content platform from the client device of the user. The user attribute information is then transmitted to the client, and stored in aggregate only at the client device, so user privacy is preserved. If the user is already a member of a user attribute bucket, the new predictions can be used at the client device to update a metric (e.g., a count and/or combined confidence score) related to the number of times the user has been added to the group, increasing the accuracy of the user attribute predictions for the user.

However, steps can be taken to ensure that the content platform cannot correlate multiple requests for content from the same user and therefore cannot track users across multiple requests, multiple web sites, or multiple domains. For example, metrics related to user attribute buckets of a user are stored only at the client device of the user and such data is not shared with content platforms, thereby preserving user privacy. Instead, by maintaining at the client device information related to the user attribute buckets to which a particular content platform added the user over time, information related to user attributes of the user across multiple requests, web sites, domains, etc., can be used to select relevant content for the user without exposing such information anywhere other than the user's device, where such information can be controlled by the user. This enables accurate selection of relevant content for users without exposing user data to other parties. Enabling such accurate selection prevents distribution of irrelevant content to users that the users would not interact with, which reduces wasted bandwidth in sending such irrelevant content to client devices. Aggregated over millions of client devices, such bandwidth savings are substantial.

Using the techniques described in this document, user attribute information can be updated at client devices of the users without transmitting third-party cookies across a public network, e.g., the Internet. By doing so, user privacy is protected, network bandwidth consumption is reduced (e.g., since cookies are no longer sent), and computational resources of the server that would receive and process the cookies is reduced.

Machine learning models can be used to predict user attribute buckets based on contextual data included in a single request for content. As the machine learning models operate on contextual data of a single request, such machine learning models can be executed by the content platforms rather than by the client device of the user, which, since content platforms typically employ include more powerful computational resources (e.g., server class computers), enables more complex machine learning models (e.g., neural networks having greater numbers of layers and/or neurons) to be used relative to those that can effectively run on client devices. In addition, this structure increases the speed at which the machine learning models are executed, which is critical in selecting and delivering additional content (e.g., digital components) with primary content of web pages or applications. For example, delays in receiving content can cause errors in web pages and native applications that request such content. In addition, digital components can be stored on the client device for selection and display to the user of the client device, which further reduces the latency in selecting and displaying a digital component.

Predicting user attribute buckets for users at the server, and using those predictions to determine which digital components might be of interest to a user can reduce the consumption of computing resources. For example, only the digital components that are more likely to be of interest to a user will be transmitted to the user's device, reducing the impact on the network of transmitting less relevant digital components, along with impact to the computing resources on the server required to transmit such digital components, and to the client device required to receive and store the digital components. Further, the client device selects from among a smaller number of digital components, again reducing resource impact. The client device can also use the user attribute buckets when selecting a digital component to display, e.g., using the user attribute buckets to filter out less relevant digital components, reducing the likelihood that computing resources will be used to display irrelevant digital components.

The details of one or more embodiments of the subject matter described in this specification are set forth in the accompanying drawings and the description below. Other features, aspects, and advantages of the invention will become apparent from the description, the drawings, and the claims.

### BRIEF DESCRIPTION OF THE DRAWINGS

FIG. 1 is a block diagram of an example environment in which digital components are selected by client devices in a privacy preserving manner.
FIG. 2 is a flow diagram of an example process for privacy-preserving content selection.
FIG. 3 is a block diagram of an example computer system.

Like reference numbers and designations in the various drawings indicate like elements.

### DETAILED DESCRIPTION

In general, this document describes systems and techniques for selecting digital components for display at client devices in ways that protect user privacy by determining relevant content based on user attributes without providing user information to unaffiliated web sites. Ensuring the privacy of personal data is a requirement of many computing systems, especially those connected to public networks such as the Internet. Some consumers who do not trust that strong privacy protection will be enforced by a system will simply choose not to use that system.

However, while it is important to protect user privacy, it remains beneficial to display to a user content relevant to or of interest of users. The techniques described in this specification use predictions relating to user attributes based on contextual data related to resources viewed by the user, without enabling content platforms or other entities to track the user's activity across multiple web sites or other resources.

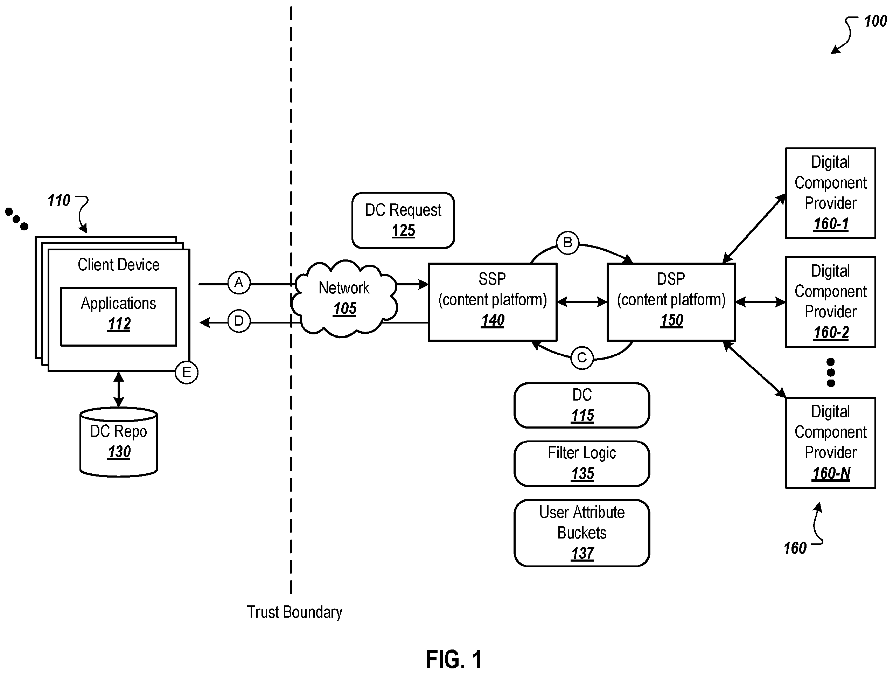

FIG. 1 is a block diagram of an example environment 100 in which digital components 115 are selected by client devices 110 in a privacy preserving manner. The environment 100 includes a data communication network 105, such as a local area network (LAN), a wide area network (WAN), the Internet, a mobile network, or a combination thereof. The data communication network 105 connects client devices 110 to a content platform, which can include supply side platforms (SSPs) 140 and/or demand side platforms (DSPs) 150. The network 105 can also connect the various content platforms to one another and/or to digital component providers 160, e.g., to servers of the digital component providers 160. Thus, content platforms can distribute digital components of multiple digital component providers to client devices 110. Further, while the digital component providers 160 are illustrated as outside the content platform, a content platform can both contain digital component providers 160 and communicate with digital component providers 160 via the network 105 that are outside the content platform.

A client device 110 is an electronic device that is capable of communicating over the network 105. Example client devices 110 include personal computers, server computers, mobile communication devices, e.g., smart phones and/or tablet computers, and other devices that can send and receive data over the network 105. A client device 110 can also include a digital assistant device that accepts audio input through a microphone and outputs audio output through speakers. The digital assistant can be placed into listen mode (e.g., ready to accept audio input) when the digital assistant detects a "hotword" or "hotphrase" that activates the microphone to accept audio input. The digital assistant device can also include a camera and/or display to capture images and visually display information. The digital assistant can be implemented in different forms of hardware devices including, a wearable device (e.g., watch or glasses), a smart phone, a speaker device, a tablet device, or another hardware device. A client device 110 can also include a digital media device, e.g., a streaming device that plugs into a television or other display to stream videos to the television, a gaming device, or a virtual reality system.

A gaming device is a device that enables a user to engage in gaming applications, for example, in which the user has control over one or more characters, avatars, or other rendered content displayed in the gaming application. A gaming device typically includes a computer processor, a memory device, and a controller interface (either physical or visually rendered) that enables user control over content rendered by the gaming application. The gaming device can store and execute the gaming application locally, or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

A client device 110 can include applications 112, such as web browsers and/or native applications, to facilitate the sending and receiving of data over the network 105. A native application is an application developed for a particular platform or a particular device (e.g., mobile devices having a particular operating system). Although operations may be described as being performed by the client device 110, such operations may be performed by an application 112 running on the client device 110 and/or by an operating system running on the device.

The applications 112 can display electronic resources, e.g., web pages, application pages, or other application content, to a user of the client device 110. The electronic resources can include digital component slots for displaying digital components 115 with the content of the electronic resources. A digital component slot is an area of an electronic resource (e.g., web page or application page) for displaying a digital component 115. A digital component slot can also refer to a portion of an audio and/or video stream (which is another example of an electronic resource) for playing a digital component 115.

An electronic resource is also referred to herein as a resource for brevity. For the purposes of this document, a resource can refer to a web page, application page, application content displayed by a native application, electronic document, audio stream, video stream, or other appropriate type of electronic resource with which a digital component 115 can be displayed.

As used throughout this document, the phrase "digital component" refers to a discrete unit of digital content or digital information (e.g., a video clip, audio clip, multimedia clip, image, text, or another unit of content). A digital component 115 can electronically be stored in a physical memory device as a single file or in a collection of files, and digital components 115 can take the form of video files, audio files, multimedia files, image files, or text files and include advertising information, such that an advertisement is a type of digital component 115. For example, the digital component 115 may be content that is intended to supplement content of a web page or other resource displayed by the application 112. More specifically, the digital component 115 may include digital content that is relevant to the resource content (e.g., the digital component 115 may relate to the same topic as the web page content, or to a related topic). The provision of digital components 115 can thus supplement, and generally enhance, the web page or application content.

A client device 110 can also include, or be coupled to, a digital component repository 130, which can be any storage system appropriate for storing digital components 115. For example, the digital component repository 130 can be a persistent storage system such as a database or file system, or a transient storage system such as a dedicated area of random access memory (RAM).

When the application 112 loads a resource that includes a digital component slot, the application 112 can generate a digital component request 125 that requests a digital component 115 for display in the digital component slot. In some implementations, the digital component slot and/or the resource can include code (e.g., scripts) that cause the application 112 to request a digital component 115 from an SSP 140. A digital component request 125 sent by a client device 110 can include non-sensitive data, such as contextual data, generic keyword and/or a query string. However, sensitive data can be excluded from the digital component request 125.

Further to the descriptions throughout this document, a user may be provided with controls (e.g., user interface elements with which a user can interact) allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

As described above, a digital component request 125 can include contextual data, which is generally considered non-sensitive. The contextual data can describe or otherwise relate to the environment in which a selected digital component 115 will be displayed. The contextual data can include, for example, coarse location information indicating a general location of the client device 110 that sent the digital component request 125, the day of week and/or hour of day in the locale of the client device, a resource (e.g., website or native application, which can be associated with a set of topics) with which the selected digital component 115 will be displayed, a spoken language setting of the application 112 or client device 110, the number of digital component slots in which digital components 115 will be displayed with the resource, the types of digital component slots, text and/or images that are, or will be, displayed, and other appropriate contextual information.

An SSP 140 is a technology platform implemented in hardware and/or software that automates the process of obtaining digital components 115 for the resources. Publishers of resources can use an SSP 140 to manage the process of obtaining digital components 115 for digital component slots of its resources. Each publisher can have a corresponding SSP 140 or multiple SSPs 140. Some publishers may use the same SSP 140.

A DSP 150 is a technology platform implemented in hardware and/or software that automates the process of distributing digital components 115 for display with the resources and/or applications. A DSP 150 can interact with multiple supply-side platforms SSPs on behalf of digital component providers 160 to provide digital components 115 for display with the resources of multiple different publishers. Digital component providers 160 can create (or otherwise publish) digital components 115 that are displayed in digital component slots of publisher's resources.

The DSP 150 (or SSP 140) can further provide to client devices 110 one or more filter logic modules 135 that can be encoded as computing instructions that indicate, for each DSP 150, whether a particular digital component 115 is responsive to a digital component request 125, and more specifically, whether the digital component 115 should be removed or filtered from consideration, and /or, as noted above, whether the digital component 115 should be preferred, or "boosted," for display. The client device 110 can use the filter logic to filter digital components 115 from the list of digital components 115 that are considered for display on a client device 110. The filter logic in the filter logic module 135 can be expressed in any appropriate programming language, such as Python or JavaScript, a rules language, or any other appropriate technique for determining a confidence measure. In some implementations, the filter logic module 135 can include a reference (e.g., a Uniform Resource Locator) to a trusted computing resource that provides the computing instructions and returns a result to the client device 110.

Additionally, the DSP 150 can provide to a client device 110 user attribute buckets 137 relevant to a DC request 125. As described above, a user attribute describes any characteristic of a user, such as age, gender, education, shoe size, and so on. A user attribute bucket is a value or range of values for the characteristic. For example, "high school" and "college" are example values for an education characteristic (which is an example type of user attribute), and the age ranges "18 to 24" and "25 to 34" are example ranges of values for the age range attribute (which is another type of user attribute). Examples of characteristics can include age, shoe size, income, and education level, among many other examples.

The user attribute buckets 137 can be expressed in any appropriate data format. For example, user attribute buckets 137 can be expressed in JavaScript Object Notation (JSON) that includes a reference to the DSP providing the user attribute buckets 137, and one or more tokens (e.g., alphanumeric strings) that represent valid values for a user attribute bucket. For example, tokens for an "age" user attribute bucket 137 might include "18-24," "25-34," "35-44," and so on. If a second attribute group includes education tokens such as "high school," "college," and "other" (other education tokens can also be included), the user attribute buckets 137 can be expressed as a multidimensional vector such as {{"18-24,", "25-34", "35-44"}, {"high school", "college", "other"}}. In some examples, an attribute group can include an "unknown" user attribute bucket that can be used for attributes that cannot be determined from the contextual data, or if the determination of a user attribute bucket is sufficiently weak (e.g., the confidence is below a configured threshold such as 40%, 30%, 20%, etc.).

In some implementations, the DSP 150 can provide a user attribute bucket confidence index that indicates a predicted likelihood that a user is a member of a user attribute bucket. For example, if a DSP 150 determines that there is 70% confidence that the user is a member of a first user attribute bucket of "medium" shoe size (which may have options of {"small", "medium", "large"}), 60% confidence that a user is a member of a second user attribute bucket of age 25-34, 90% confidence that the user is a member of a third user attribute bucket of "college" for education level having options of {"high_school", "college", "graduate", "other"}, and so on, the DSP 150 can provide both the user attribute buckets 137 and the user attribute bucket confidence index for each. In the example above, the DSP 150 can provide the following {{0, 0.7, 0}, {0, 0.6, 0}, {0, 0.9, 0, 0}} to indicate a 70% confidence that the user wears medium size shoes, a 60% confidence the user is 25-34 and a 90% confidence in a college education level. In some cases, the DSP 150 can provide confidence levels for more than one attribute. For example, in the example above, if the DSP 150 determined a 20% confidence wears small shoes, a 70% confidence wears medium shoes and a 10% confidence in the user wears large shoes, the DSP might provide {{0.2 ,0.7, 0.1},{0, 0.6, 0}, {0, 0.9, 0, 0}}, where {0.2 ,0.7, 0.1} represents the confidence for small (20%), medium (70%) and large (10%) shoes; {0, 0.6, 0} represents 60% confidence of the 25-34 age bracket, with no predictions for other age brackets; and {0, 0.9, 0, 0} represents a 90% confidence that the education level is college, with no predictions for other education levels. In some implementations, the information can be provided as "key/value" pairs, such as (Age_18_25, 0.75) which can indicate a 75% confidence that the user is age 18 to 25.

Client devices 110 can store indications of user attribute buckets 137, including aggregate indications of user attribute buckets 137. For each user of the client device 110, the client device 110 can store, for each content platform and for each user attribute bucket, a membership measure that can be an indication of the frequency that that user attribute bucket has been encountered, e.g., the frequency at which the user has been assigned to the user attribute bucket. For example, if DSP 150 D₁ assigns users to three user attributes, I₁, I₂, I₃, e.g., corresponding to shoe size, age and education (others can also be used), the client device 110 can begin with a count of zero for each user attribute bucket for each of I₁, I₂, I₃, which can be expressed as a vector that includes zero values for each user attribute bucket for each user attribute: {{0, 0, 0},{0, 0, 0}, {0, 0, 0, 0}}. In this example, there are three user attribute buckets for I₁ and I₂, and four user attribute buckets for I₃, and each user attribute bucker has a value of zero. If the content platform first provides an indication of user attribute buckets 137 for DSP 150 Di that includes values for (or an indication that the user has been assigned to) user attribute buckets for attributes I₁ and I₂, the client device can increment the vector entries for those user attribute buckets, e.g., such that the vector becomes {{1, 0, 0},{0, 1, 0}, {0, 0, 0, 0}}. In this example, the user has been assigned to the first user attribute bucket for attribute I₁ and to the second user attribute bucket for attribute I₂, resulting in those values being incremented from a zero to a one. If the DSP Di provides user attribute bucket confidence indices, the client device can sum the indices, or combine the indices using other techniques such as using a measure of central tendency. If the content platform then provides a second indication of the same user attribute buckets 137 for D₁, the client device can increment the corresponding vector entries such that the vector becomes {{2, 0, 0},{0, 1, 0}, {0, 0, 0, 0}}. In this example, the first user attribute bucket 137 in the first user attribute I₁ is a stronger signal of the user attribute bucket as compared to the other user attributes buckets 137 for other user attributes. In other words, if user attribute I₁ corresponds to shoe size and user attribute I₂ corresponds to age, there is a stronger confidence that the prediction of the user's shoe size is correct relative to the prediction of the user's age and education (third user attribute I₃). Note that a second DSP, D₂, can have different user attributes, including a different number of user attributes, e.g., I_{1.} ... I_{7,} and the values in the vector for D₂ are not influenced by the information in Di and vice versa. Thus, user information relating to interactions between a user and each DSP is isolated, maintaining user privacy.

The DSP 150 can further determine and provide attribute groups associated with digital components 115 provided by the DSP 150. Attribute groups associated with digital components 115 can be expressed analogously to attribute groups associated with users, e.g., as token, vectors, confidence values, and so on. In some implementations, the user attribute bucket information can include negative associations that indicate that a digital component 115 should not be displayed to users in a particular user attribute bucket. For example, a particular digital component 115 might be associated with education of "high school" and an age "25-34," and another digital component 115 might be associated with "not small shoes," indicating that the digital component 115 should be filtered when the user is predicted to wear small shoes.

The DSP 150 can associate attribute buckets with digital components 115 using various techniques. For example, a digital component provider 160 can specify one or more user attribute buckets for the digital component 115 when the content provider 160 provides the digital component 115 to the DSP 150. In another example, the DSP 150 can train and use a machine learning model that is configured to take a digital component 115 as input and to determine one or more user attribute buckets for the digital component 115, e.g., one or more user attribute buckets that are predicted to be relevant to the digital component 115 or which users having a user attribute that matches the user bucket are likely to find relevant. Such techniques can also be combined. For example, if a digital component provider 160 does not provide user attribute buckets for a digital component 115, the DSP 150 can use a machine learning model to determine user attribute buckets for the digital component 115 provided by the digital component provider 160.

The user attribute buckets for a digital component 115 can be used as distribution criteria for filtering the digital component from digital component selection processes and/or for selecting the digital component from multiple available digital components. For example, a content platform or client device 110 can filter a digital component from selection for a user that is assigned to a particular user attribute bucket if the digital component has distribution criteria that specifies that the digital component is only eligible when the user for which a digital component is being selected is not assigned to the particular attribute bucket. In another example, a digital component can have distribution criteria that indicates that the digital component is eligible for selection for users that are assigned to a particular user attribute bucket. If the user for which a digital component is being selected is not assigned to the particular user attribute bucket (or the confidence for that bucket is less than a threshold), the digital component can be filtered from consideration in the selection process.

An example process for selecting and providing a digital component 115 for display at a client device 110 is illustrated in stages A - E, which illustrate a flow of data between the components of the environment 100.

In stage A, the application 112 sends a digital component request 125 over the network 105 to a content platform, such as an SSP 140. As described above, the application 112 can send a digital component request to request a digital component 115 for display in a digital component slot of a resource being displayed by the application 112. The digital component request 125 can include contextual data. In stage B, the SSP 140 forwards the digital component request 125 to one or more DSPs 150.

In stage C, each DSP 150 can determine or predict that the user of the client device 110 which sent the request is a member of one or more particular user attribute buckets 137, and provide data identifying those user attribute buckets 137 to the SSP 140. For example, the DSP 150 can determine or predict the user attribute buckets 137 for the user based on the contextual data of the digital component request 125.

The DSP 150 can also send one or more filter logic modules 135 that can be used by the client device 110 to determine whether to filter digital components 115 that are not responsive to the digital component request 125. In addition, the DSP 150 can send digital components 115 that are potentially responsive to the digital component request 125 for consideration by the client device 110 and the user attribute buckets associated with the digital components 115. The client device 110 can store or cache such digital components 115 in its digital component repository 130. In some cases, the DSP 150 can determine that the client device 110 already possesses, or has access to, the responsive digital components 115 and/or filter logic module(s) 135, and therefore does not have to provide the digital components 115 and/or filter logic module(s) 135.

In stage D, the SSP 140 sends data identifying the user attribute buckets 137 determined or predicted for the user, digital components 115, and/or filter logic module(s) 135 as received from the DSP 150. In some implementations, the SSP 140 can filter digital components 115 and/or selection parameters prior to sending the digital components 115 and/or selection values to the client device 110. For example, the SSP 140 can filter digital components 115 and/or selection parameters based on publisher controls specified by the publisher of the resource being displayed by the application 112. In a particular example, a publisher of a web page about a particular event may define, as a publisher control, that digital components 115 related to another event may not be displayed with this web page. The SSP 140 can filter based on rules or other data provided by the publisher.

The client device 110 can receive from the SSP 140 the digital components 115, filter logic module(s) 135 and the data identifying the user attribute buckets 137 for the user. The client device 110 can aggregate the user attribute buckets 137 with previously received user attribute bucket information to create aggregate user attribute bucket information, e.g., by incrementing values in a vector, as described above.

In stage E, the client device 110 can use the aggregate user attribute bucket information associated with a user, user attribute buckets associated with the digital component 115, and/or the filter logic module(s) 135 provided by the various DSPs to select a digital components to display to a user of the client device 110. For example, the client device 110 can use this information and/or modules to filter a digital component 115 from among the received digital components 115 such that the digital component 115 is not considered for display to the client device 110. The determination of whether to filter a component can use various techniques. In some implementations, the client device 110 can obtain distribution criteria (e.g., which may be in the form of rules) relating to a digital component 115, e.g., distribution criteria provided by the supplier of the digital component 115. For example, distribution criteria can specify that a digital component 115 is to be filtered from consideration if the user is predicted to be 18 to 24 years old or if the prediction that the user is 18 to 24 is stronger than a configured threshold (e.g., 70% confidence).

In some implementations, the client device 110 can execute, for each DSP, one or more filter logic module(s) 135 provided by that DSP. Each such filter logic module 135 can evaluate the likelihood that a user is not interested in a digital component 115 (e.g., will not interact with the digital component 115). To make such a determination, the filter logic module 135 can access the aggregate user attribute bucket information for that DSP and the user attribute bucket information for the digital component 115, and use the aggregate user attribute bucket information to produce a confidence score ("score" for brevity) that indicates the confidence of the DSP that a particular user will have not have interest in a particular digital component 115. The client device 110 can use the score to filter digital components 115 from consideration (e.g., removing from consideration all digital components 115 for which the score satisfies a threshold), select a digital component 115 from among the digital components 115 that were not filtered, and display the selected digital component 115 on the client device 110.

In some implementations, the client device 110 can use the user attribute bucket information and/or the score to select the digital component 115. For example, one digital component 115 might have a strong affiliation for individuals with a high school education who are 18-24 and another digital component 115 might have a strong affiliation with individuals with a college education who are 25-34.

In some implementations, the client device 110 can send a message to the content platform indicating which digital component 115 was displayed. In some implementations, the client device 110 can send a message to the content platform indicating that a digital component 115 was filtered. In some implementation, the client device 110 can provide additional data that can enable reporting functions, provided that data are aggregated and privacy preserving.

In some implementations, an application running on the client device 110 processes the user information and selects digital components based on the user information and/or filter modules. This application can be an application 112 that displays primary content and/or digital components to users or a trusted application, e.g., the operating system, a secure environment provided by the operating system, a secure web browser, or another application. In some implementations, this trusted application can run in trusted execution environment (TEE) of the client device 110.

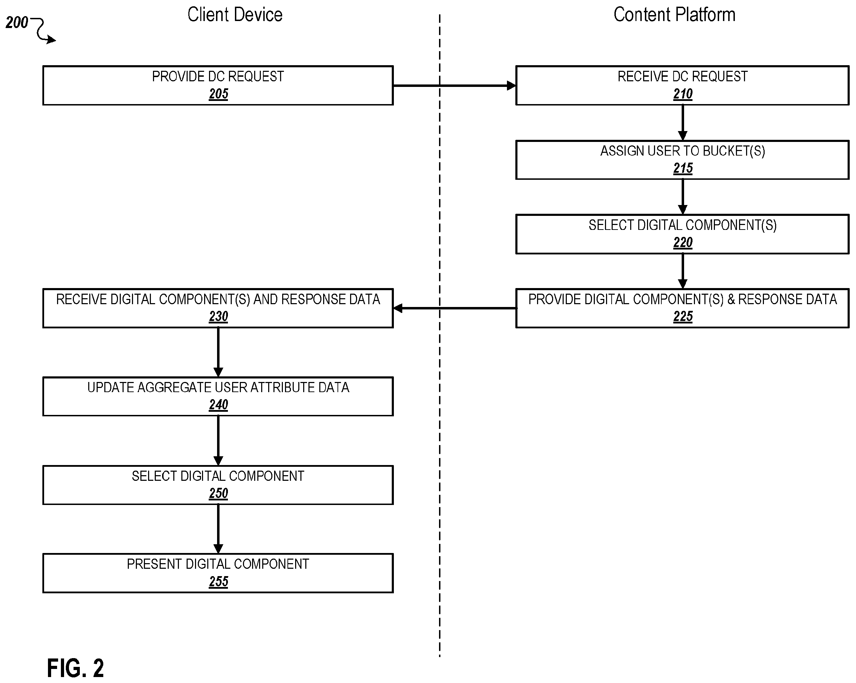

FIG. 2 is a flow diagram of an example process for privacy-preserving content selection. For convenience, the process 200 will be described as being performed by the components of a system for privacy-preserving content selection, e.g., client devices 110 and content platforms 140, 150 of FIG. 1 appropriately programmed to perform the process 200. Operations of the process 200 can also be implemented as instructions stored on one or more computer readable media, which may be non-transitory, and execution of the instructions by one or more data processing apparatus can cause the one or more data processing apparatus to perform the operations of the process 200. One or more other components described herein can perform operations of the process 200.

A client device of a user provides (205) and the content platform receives (210) a digital component request that requests one or more digital components for display at the client device. As described above, content platforms can distribute digital components provided by multiple digital component providers. Although in this example a single content platform is shown, the digital component request can be provided to multiple content platforms, e.g., to multiple DSPs. An application running on the client device can generate and send the digital component request.

The client device can provide and the content platform can receive the request using any appropriate technique. For example, the digital component request can be transmitted and received using HyperText Transport Protocol (HTTP) or HTTP-Secure (HTTP-S). In another example, the content provider can include an Application Programming Interface (API), which, when called by the client device, enables the client device to provide a digital component request to a content platform.

The request can include contextual data describing or otherwise relating to an environment in which the digital component will be displayed. The contextual data can include coarse location information that identifies a location of the client device, a description of a resource with which the given digital component will be displayed, the type of the client device (e.g., smart phone or gaming device), and/or other types of contextual data.

The content platform can assign (215) the user of the client device to one or more user attribute buckets. The content platform can select the user attribute buckets for assignment based, at least in part, on the contextual data. In some implementations, the content platform can include a model that uses the contextual data to determine which user attribute buckets, if any, to which the user can be added. The model can take any appropriate form. For example, the model can be a machine learning model (e.g., a deep neural network (DNN), a logistic regression model, a decision tree or other suitable machine learning models) that is configured to output user attribute buckets based on contextual data. The content platform can process an input that includes the contextual data using the machine learning model, and the model can produce as output indicators associated with user attribute buckets. The indicators can be user attribute bucket identifiers that uniquely identify the user attribute buckets. The output can also include a user attribute bucket confidence index that indicates the likelihood that the user of the client device should be added to each of the one or more user attribute buckets. In another example, the model can be a set of rules that include conditions and results such that, when a condition is satisfied, a result is produced. The conditions can depend on the contextual data, and the results can be user attribute bucket(s) to which users are assigned.

In one example, the content platform can train a machine learning model to predict user attributes of a user based on contextual data received in a single digital component request. The model can be trained, for example, based on labeled training data. The labeled training data can include, for each of multiple sets of contextual data, one or more labels that each indicate a user attribute. When the content platform receives a digital component request that includes contextual data, the content platform can provide the contextual data as input to the machine learning model and receive, as an output of the machine learning model, one or more attribute bucket identifiers that each identify a user attribute bucket corresponding to an attribute that is likely to be an attribute of a user for which such contextual data was received.

The machine learning model can also be trained to output a user attribute bucket confidence index for each user attribute bucket. This user attribute bucket confidence index for a user attribute bucket can indicate a level of confidence that a user for which the contextual data was received has the attribute corresponding to the user attribute bucket. The user attribute bucket confidence index can be based on the contextual data.

In some implementations, a content platform can use multiple machine learning models, e.g., one for each user attribute bucket created by the content platform. A machine learning model for a user attribute bucket can be trained to output a user attribute bucket confidence index score for the user attribute bucket based on the contextual data of a digital component request, e.g., similar to how a machine learning model is trained to output confidence scores for multiple user attribute buckets. In some implementations, a single model can be used to output confidence for multiple features (e.g., age and shoe size).

As the machine learning models are executed by content platforms rather than client devices, the machine learning models can be executed on server class computers or machine learning accelerators (e.g., graphics processing units (GPUs), application specific integrated circuits (ASICs), or tensor processing units (TPUs)). This enables more complex and more powerful machine learning models to be used to predict the user attribute buckets for users.

The content platform can then select one or more user attribute buckets for the user based on the user attribute bucket confidence indices. For example, the content platform can indicate to the client device that the client device is to add the user to each user attribute bucket that has a user attribute bucket confidence index above a specified threshold, which can be zero. In another example, the content platform can indicate to the client device that the client device should add the user to a specified number of user attribute buckets having the highest user attribute bucket confidence indices, e.g., the top five, ten, or other number of the highest scoring user attribute buckets.

In some implementations, the determination can include a user attribute bucket confidence index that indicates a likelihood that a user has an attribute associated with a user attribute bucket, as described above. For example, a value of 1 can indicate near certainty that a user attribute bucket applies to the user, a value of 0 can indicate near certainty that the user attribute bucket does not apply to the user, and values between 0 and 1 can indicate relative confidence, e.g., 0.5 indicating 50% certainty that the user attribute bucket applies to the user. In some implementations, the determination can include a confidence index range. For example, a confidence index range can be "below .1", ".15 to .20", ".15 to .25", "over .5", and "over .9, among many other examples. The content platform can provide to the client device the level of certainty for each user attribute bucket.

In some implementations, the content platform can determine, for one or more of the selected user attribute buckets to which the user has been assigned, a membership measure (e.g., membership count) that is based on (e.g., indicates) a number of times that the user has been assigned to the given user attribute bucket. For example, if a user had previously been assigned to a user attribute bucket twice, and in response to a current digital component request, the content platform again assigns the user to the user attribute bucket, the content platform can determine that the user has been assigned to the user attribute bucket three times. Such an increased number of assignments can increase the confidence that the user is properly assigned to the user attribute bucket.

In some implementations, the content platform can determine the membership measure based on confidence. For example, if the user was previously assigned to a user attribute bucket twice with confidence values of 0.7 and 0.8, the user is currently assigned to the user attribute bucket with confidence 0.85, the content platform can assign a membership measure of 2.35, which is the sum of the three confidence values (i.e., 0.7 + 0.8 + 0.85). Although a sum is used here, other aggregation techniques can be used such as an average or other measure of central tendency. Other techniques for updating membership measures can also be used, such as using a decaying average for the confidence indices.

The content platform can select (220) one or more digital components for distribution to the client device. The content platform can select the digital component(s) based on the user attribute buckets associated with each digital component, contextual data of the digital component request and/or the user attribute bucket(s) to which the user of the client device was assigned (e.g., based on the current digital component request). For example, the content platform can select one or more digital component(s) that are relevant to topics of the resource with which the digital component(s) may be displayed. In another example, the content platform can select one or more digital component(s) that are relevant to one or more user attribute buckets to which the user has been assigned, e.g., if the digital component is associated with an "18-24" user attribute bucket and the user has been assigned to that bucket. In a third example, the content platform can select multiple digital components that are relevant to topics, then filter out digital components not predicted to be of interest to the user attribute buckets assigned to the user and/or digital components that are configured to be excluded from consideration for one or more user attribute buckets. For example, if a digital component is associated with the "18-24" user attribute bucket, and the user is not assigned to that bucket, the content platform can filter the digital component from consideration. Filtering digital components that are likely to be irrelevant to a user before they are transmitted to the user's client device reduces the use of network bandwidth, and eliminates the processor resources that would have been used for the network transmission at both the content platform and at the client device.

To select the digital component(s), the content platform can use a machine learning model. For example, a machine learning model can be trained to output, for each of multiple digital components, a relevancy score that indicates a level of relevancy of the digital component to the environment indicated by the contextual data of the digital component request. The content platform can select a specified number of digital components (e.g., a number specified by the digital component request) based on the relevancy scores. The content platform can process an input that includes the contextual information using the machine learning model, and the model can produce an output that describes one or more selected digital components. In some implementations, the model used to determine user attribute buckets can be the same model that is used to determine digital components. For example, such a model can be a DNN configured to produce outputs that describe zero or more user attribute buckets and zero or more digital components. As described above, the content platform can then filter from the list of digital components selected by the machine learning model, digital components

The content platform provides (225), to the client device, digital component response data, and the client device receives (230) the response data. The response data can be configured to initiate an update, based on each user attribute bucket to which the user is assigned, to aggregated user attribute data for the user stored at the client device. For example, the response data can include a request for an application running on the client device to update the aggregated user attribute data for the user. This aggregated user attribute data can be specified to the content platform. For example, user attribute data provided by multiple content platforms may not be combined.

The response data can also be configured to enable the application to select, from among multiple candidate digital components, a given digital component to display to the user based on the aggregated user attribute data. For example, an application running on the client device can be configured to select a digital component from multiple digital components provided by multiple content platforms.

The digital response data can include the digital components selected by the content platform, and in some implementations, providing the digital component(s) can include providing data identifying the digital component without providing the digital component itself. For example, the content platform can provide, for each digital component, a resource locator (e.g., Uniform Resource Locator (URL) or Uniform Resource Identifier (URI)) for a resource from which the client device can download the digital component. The digital response data can further include the user attribute buckets associated with each digital component.

The digital component response data can also include data indicating each user attribute bucket to which the user is assigned. In some implementations, the digital component response data includes an indication that a user was assigned to each of the one or more user attribute buckets. In some implementations, the digital component response data can include, for each user attribute bucket to which the user is assigned, a confidence score that indicates a confidence in a prediction that an actual user attribute of the user matches the particular value or value range corresponding to the user attribute bucket.

In addition, the digital component response data can include a filter logic module that includes executable instructions that are configured to produce a determination that indicates whether a digital component should be filtered from consideration. The client device can execute the filter logic in the filter logic module to determine whether to remove one or more digital components from consideration. In some implementations, the digital component response data can include a reference to (e.g., resource locator for) a filter logic module located on a separate computing system instead of, or in addition to, including the executable instructions. The client device 110 can provide anonymized data to the filter logic module on the separate computer system, which can execute the filter logic module and return the results. Providing a reference to a filter logic module can reduce the computing load on the client device. In another example, the client device 110 can download the filter module from a network location based ont eh reference.

The content platform can provide the digital component response data and/or the selected digital component(s) using any appropriate technique. For example, if the content platform received the digital component request as an HTTP or HTTP-S GET request, the content platform can provide an HTTP or HTTP-S response that includes the selected digital component and instruction data in the response body. The client device can receive (230) the digital component and instruction data using the corresponding receiving technique, such as receiving an HTTP or HTTP-S response.

The client device can update (240) the aggregate user attribute data. The client device can update, for each of the one or more user attribute buckets, a membership measure that indicates that the user has been added to the user attribute bucket. In some implementations, techniques such as counting instances of a user attribute bucket appearing or summing confidence scores can be used. In another example, the client platform can use a decaying approach where more recently received user attribute buckets indications (user group confidence indices or instance counts) are weighted more heavily. Decay can be, for example, linear or exponential.

As described above, in some implementations, the client device can maintain a vector for each DSP that indicates the number of times each user attribute bucket has been identified for a user and for that DSP. The client device can update that vector in response to receiving the digital component and instruction data. In some implementations, the vector can include user attribute bucket confidence indices that reflect the likelihood that the user of a client device should be added to a user attribute bucket. The client device can aggregate (e.g., determine the sum, average, or other measure of central tendency) the user group confidence indices received from the content platform to create an aggregate user group confidence index for each user attribute bucket.

In some implementations, the client device can receive from the content platform instructions for managing the aggregate user attribute data maintained for that content platform. For example, the content platform can deliver to the client device an indication that user attribute bucket data (e.g., counts, aggregate weights, etc.) should be reset (e.g., to zero) for that content platform. In response to receiving such instructions, the client device can manage the aggregate user attribute data according to the instruction (e.g., by resetting the counts for all user attribute buckets for the content platform to zero).

The client device can select (250) the digital component for display. The client device can include any received digital component in a digital component selection process, including digital components received in the digital component response data, digital components received in previously received digital component response data, and digital components received in other ways (e.g., loaded by the user of the client device). The client device can add the received digital component(s) to a collection of digital components received in response to the digital component request (per operation 205) for use selecting a digital component. The client device can store the digital components in a digital component repository or in other appropriate storage systems. The collection can include digital components received in response to multiple digital component requests. For example, the collection can include digital components received over a defined time period, e.g., the last week, the last month, or another appropriate time period.

In some implementations, the client device can first filter from the selection process any digital components that do not correspond to the user attribute buckets. The client device can compare the user attribute buckets associated with each digital component, and remove from consideration any digital component that is associated with a user attribute that is not associated with the user. For example, if a digital component is associated with user attribute A and the user is not associated with the user attribute bucket for A, then the client device can remove the digital component from consideration. In another example, if the digital component is associated with a user attribute bucket that indicates that the digital component should not be shown to a user with a particular user attribute, the client device can filter the digital component from consideration. In some implementations, the client device can evaluate a filter logic module, as described above, and filter digital components based on the results.

In some implementations, the client device can enforce a magnitude of association between the user and the user attribute that is associated with a digital component. Returning to the example above, if a digital component is associated with user attribute A, and the value associated with the user attribute bucket for A is below a configured threshold, the client device can remove the digital component from consideration. In some implementations, the client device can filter from consideration all digital components except the N digital components where the user attribute bucket has the highest score. Such techniques can also be used in combination. For example, the system can filter from consideration all digital components for which the user attribute bucket has a score below a threshold, then further filter from consideration all but N digital components.

The client device can enforce more complex rules. For example, a rule might specify that a digital component should be filtered if none of the user attribute buckets for the user match any user attribute buckets associated with the digital component; that a digital component should be filtered unless all user attribute buckets match; that a digital component should be filtered unless a majority of user attribute buckets match; that a digital component should be filtered unless a configured number of user attribute buckets match; that a digital component should be preferred for display based on user attribute bucket data; and so on. In addition, as described above, the client device can execute filter logic provided by a DSP.

The client device can display (255) the selected digital component using various techniques. For example, the client device can insert the digital component in a digital component slot of content being displayed. In another example, the client device can display the digital component by rendering the digital component in a graphical user interface window, in a web browser, or in another application. In further examples, if the digital component includes video, the client device can render the digital component in a video player application, and if the digital component includes audio, the client device can render the digital component in an audio player application.

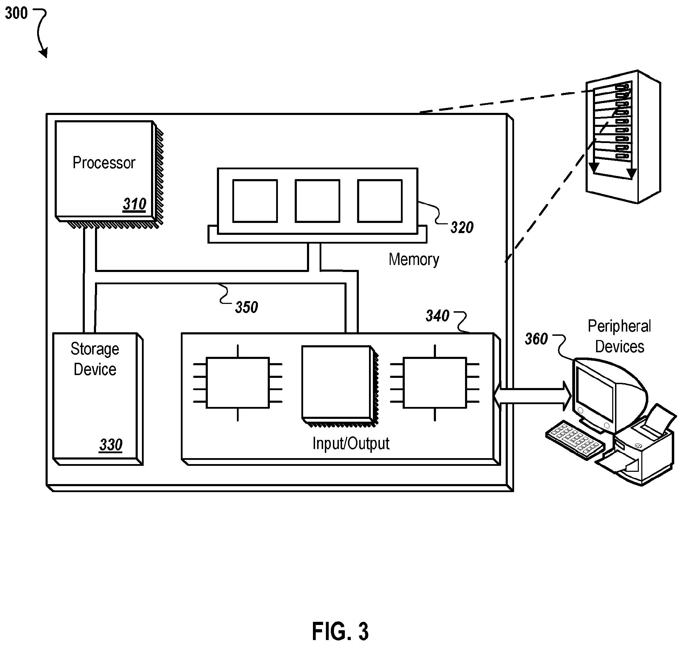

FIG. 3 is a block diagram of an example computer system 300 that can be used to perform operations described above. The system 300 includes a processor 310, a memory 320, a storage device 330, and an input/output device 340. Each of the components 310, 320, 330, and 340 can be interconnected, for example, using a system bus 350. The processor 310 is capable of processing instructions for execution within the system 300. In one implementation, the processor 310 is a single-threaded processor. In another implementation, the processor 310 is a multi-threaded processor. The processor 310 is capable of processing instructions stored in the memory 320 or on the storage device 330.

The memory 320 stores information within the system 300. In one implementation, the memory 320 is a computer-readable medium. In one implementation, the memory 320 is a volatile memory unit. In another implementation, the memory 320 is a non-volatile memory unit.

The storage device 330 is capable of providing mass storage for the system 300. In one implementation, the storage device 330 is a computer-readable medium. In various different implementations, the storage device 330 can include, for example, a hard disk device, an optical disk device, a storage device that is shared over a network by multiple computing devices (e.g., a cloud storage device), or some other large capacity storage device.

The input/output device 340 provides input/output operations for the system 300. In one implementation, the input/output device 340 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other input/output devices, e.g., keyboard, printer and display devices 360. Other implementations, however, can also be used, such as mobile computing devices, mobile communication devices, set-top box television client devices, etc.

Although an example processing system has been described in FIG. 3, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented using one or more modules of computer program instructions encoded on a computer-readable medium for execution by, or to control the operation of, data processing apparatus. The computer-readable medium can be a manufactured product, such as a hard drive in a computer system or an optical disc sold through retail channels, or an embedded system. The computer-readable medium can be acquired separately and later encoded with the one or more modules of computer program instructions, such as by delivery of the one or more modules of computer program instructions over a wired or wireless network. The computer-readable medium can be a machine-readable storage device, a machine-readable storage substrate, a memory device, or a combination of one or more of them.

The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, a runtime environment, or a combination of one or more of them. In addition, the apparatus can employ various different computing model infrastructures, such as web services, distributed computing and grid computing infrastructures.

A computer program (also known as a program, software, software application, script, or code) can be written in any suitable form of programming language, including compiled or interpreted languages, declarative or procedural languages, and it can be deployed in any suitable form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, special purpose microprocessors. Generally, a processor will receive instructions and data from a read-only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM (Erasable Programmable Read-Only Memory), EEPROM (Electrically Erasable Programmable Read-Only Memory), and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

To provide for interaction with a user, embodiments of the subject matter described in this specification can be implemented on a computing device capable of providing information to a user. The information can be provided to a user in any form of sensory format, including visual, auditory, tactile or a combination thereof. The computing device can be coupled to a display device, e.g., an LCD (liquid crystal display) display device, an OLED (organic light emitting diode) display device, another monitor, a head mounted display device, and the like, for displaying information to the user. The computing device can be coupled to an input device. The input device can include a touch screen, keyboard and a pointing device, e.g., a mouse or a trackball, by which the user can provide input to the computing device. Other kinds of devices can be used to provide for interaction with a user as well; for example, feedback provided to the user can be any suitable form of sensory feedback, e.g., visual feedback, auditory feedback, or tactile feedback; and input from the user can be received in any suitable form, including acoustic, speech, or tactile input.

The computing system can include clients and servers. A client and server are generally remote from each other and typically interact through a communication network. The relationship of client and server arises by virtue of computer programs running on the respective computers and having a client-server relationship to each other. Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described is this specification, or any combination of one or more such back-end, middleware, or front-end components. The components of the system can be interconnected by any suitable form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many implementation details, these should not be construed as limitations on the scope of what is being or may be claimed, but rather as descriptions of features specific to particular embodiments of the disclosed subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination. Thus, unless explicitly stated otherwise, or unless the knowledge of one of ordinary skill in the art clearly indicates otherwise, any of the features of the embodiments described above can be combined with any of the other features of the embodiments described above.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and/or parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the invention have been described. Other embodiments are within the scope of the following claims. For example, the actions recited in the claims can be performed in a different order and still achieve desirable results.

## Claims

1. A computer-implemented method, comprising:
receiving (210), from a client device of a user and by a content platform, a digital component request that requests one or more digital components for display at the client device and that comprises contextual data related to an environment in which the digital component will be displayed;
assigning (215), by the content platform and based on the contextual data, the user to one or more user attribute buckets, wherein each of the one or more user attribute buckets is associated with at least one type of user attribute and corresponds to a particular value or value range for the type of user attribute;
selecting (220), based on the contextual data and each user attribute bucket to which the user is assigned, a plurality of candidate digital components for distribution to the client device; and
providing (225), by the content platform and to the client device, digital component response data that initiates an update, based on each user attribute bucket to which the user is assigned, to aggregated user attribute data for the user stored at the client device and wherein an application running on the client device is configured to select, from among the plurality of candidate digital components, a given digital component to display to the user based on the aggregated user attribute data.

2. The computer-implemented method of claim 1, wherein the digital component response data comprises, for each user attribute bucket to which the user is assigned, a confidence score that indicates a confidence in a prediction that an actual user attribute of the user matches the particular value or is within a value range corresponding to the user attribute bucket.

3. The computer-implemented method of claim 1 or 2, wherein the aggregated user attribute data for the user stored at the client device comprises user attribute buckets to which the user is assigned in response to a plurality of digital component requests and based on respective digital component response data received in response to the plurality of digital component requests.

4. The computer-implemented method of any preceding claim, wherein the digital component response data comprises a filter logic module that comprises executable instructions configured to produce a confidence score that indicates a confidence in a prediction that an actual user attribute of the user matches the particular value or is within a value range corresponding to the user attribute bucket.

5. The computer-implemented method of claim 4, wherein the filter logic processes the aggregated user attribute data at the client device to produce a respective confidence score for each of a plurality of user attribute buckets.

6. The computer-implemented method of any preceding claim, wherein the digital component response data comprises a reference to a filter logic module located on a separate computing system that is configured to produce a confidence score that indicates confidence in a prediction that an actual user attribute of the user matches the particular value or is within a value range corresponding to the user attribute bucket.

7. The computer-implemented method of claim 6, wherein the filter logic processes the aggregated user attribute data at the client device to produce a respective confidence score for each of a plurality of user attribute buckets..

8. The computer-implemented method of any preceding claim, wherein the client device is configured to determine, for each of a plurality of user attribute buckets, a membership measure based on a number of times that the user has been assigned to the user attribute bucket.

9. The computer-implemented method of claim 8, wherein the client device is configured to determine, for each of a plurality of user attribute buckets, a confidence that score that indicates a confidence in a prediction that an actual user attribute of the user matches the particular value or is within a value range corresponding to the user attribute bucket based at least in part based on the membership measure for the user attribute bucket.

10. The computer-implemented method of claim 8, wherein the client device selects a given digital component to display to the user based at least in part based on the membership measure for each user attribute bucket.

11. The computer-implemented method of any preceding claim, wherein the contextual data comprises at least one of coarse location information of the client device or data identifying a resource with which the given digital component will be displayed.

12. A system comprising:
One or more processors (310); and
one or more storage devices (330) storing instructions that, when executed by the one or more processors, cause the one or more processors to carry out the method of any preceding claim.

13. A computer readable medium carrying instructions that, when executed by one or more processors, cause the one or more processors to carry out the method of any one of claims 1 to 11.

14. A computer program product comprising instructions which, when executed by a computer, cause the computer to carry out the steps of the method of any of claims 1 to 11.

## Patentansprüche

1. Computerimplementiertes Verfahren, umfassend:
Empfangen (210) einer digitalen Komponentenanfrage, die eine oder mehrere digitale Komponenten zur Anzeige auf der Client-Vorrichtung anfordert und Kontextdaten in Bezug auf eine Umgebung, in der die digitale Komponente angezeigt wird, umfasst, durch eine Client-Vorrichtung eines Benutzers und durch eine Inhaltsplattform;
Zuweisen (215) des Benutzers zu einem oder mehreren Benutzerattribut-Buckets durch die Inhaltsplattform und basierend auf den Kontextdaten, wobei jeder der einen oder der mehreren Benutzerattribut-Buckets mindestens einem Typ von Benutzerattribut zugeordnet ist und einem bestimmten Wert oder Wertebereich für den Typ von Benutzerattribut entspricht;
Auswählen (220) einer Vielzahl von digitalen Kandidatenkomponenten zur Verteilung an die Client-Vorrichtung basierend auf den Kontextdaten und jedem Benutzerattribut-Bucket, dem der Benutzer zugewiesen ist; und
Bereitstellen (225) von digitalen Komponentenantwortdaten, die eine Aktualisierung basierend auf jedem Benutzerattribut-Bucket, dem der Benutzer zugewiesen ist, zu aggregierten Benutzerattributdaten für den Benutzer initiiert, die auf der Client-Vorrichtung gespeichert sind, durch die Inhaltsplattform und an die Client-Vorrichtung, und wobei eine Anwendung, die auf der Client-Vorrichtung ausgeführt wird, dazu konfiguriert ist, aus der Vielzahl von digitalen Kandidatenkomponenten eine bestimmte digitale Komponente auszuwählen, die dem Benutzer basierend auf den aggregierten Benutzerattributdaten angezeigt werden soll.

2. Computerimplementiertes Verfahren nach Anspruch 1, wobei die digitalen Komponentenantwortdaten für jeden Benutzerattribut-Bucket, dem der Benutzer zugewiesen ist, eine Vertrauensbewertung umfassen, die das Vertrauen in eine Vorhersage angibt, dass ein tatsächliches Benutzerattribut des Benutzers mit dem bestimmten Wert übereinstimmt oder innerhalb eines Wertebereichs liegt, der dem Benutzerattribut-Bucket entspricht.

3. Computerimplementiertes Verfahren nach Anspruch 1 oder 2, wobei die aggregierten Benutzerattributdaten für den Benutzer, die auf der Client- Vorrichtung gespeichert sind, Benutzerattribut-Buckets umfassen, denen der Benutzer als Reaktion auf eine Vielzahl von digitalen Komponentenanfragen und basierend auf jeweiligen digitalen Komponentenantwortdaten, die als Reaktion auf die Vielzahl von digitalen Komponentenanfragen empfangen werden, zugewiesen ist.

4. Computerimplementiertes Verfahren nach einem der vorhergehenden Ansprüche, wobei die digitalen Komponentenantwortdaten ein Filterlogikmodul umfassen, das ausführbare Anweisungen umfasst, die dazu konfiguriert sind, eine Vertrauensbewertung herzustellen, die ein Vertrauen in eine Vorhersage angibt, dass ein tatsächliches Benutzerattribut des Benutzers mit dem bestimmten Wert übereinstimmt oder innerhalb eines Wertebereichs liegt, der dem Benutzerattribut-Bucket entspricht.

5. Computerimplementiertes Verfahren nach Anspruch 4, wobei die Filterlogik die aggregierten Benutzerattributdaten auf der Client- Vorrichtung verarbeitet, um eine entsprechende Vertrauensbewertung für jeden einer Vielzahl von Benutzerattribut-Buckets herzustellen.

6. Computerimplementiertes Verfahren nach einem der vorhergehenden Ansprüche, wobei die digitalen Komponentenantwortdaten eine Referenz zu einem Filterlogikmodul umfassen, das sich auf einem separaten Rechensystem befindet, das dazu konfiguriert ist, eine Vertrauensbewertung herzustellen, die das Vertrauen in eine Vorhersage angibt, dass ein tatsächliches Benutzerattribut des Benutzers mit dem bestimmten Wert übereinstimmt oder innerhalb eines Wertebereichs liegt, der dem Benutzerattribut-Bucket entspricht.

7. Computerimplementiertes Verfahren nach Anspruch 6, wobei die Filterlogik die aggregierten Benutzerattributdaten auf der Client-Vorrichtung verarbeitet, um eine entsprechende Vertrauensbewertung für jeden einer Vielzahl von Benutzerattribut-Buckets herzustellen.

8. Computerimplementiertes Verfahren nach einem der vorhergehenden Ansprüche, wobei die Client-Vorrichtung dazu konfiguriert ist, für jeden einer Vielzahl von Benutzerattribut-Buckets ein Mitgliedschaftsmaß basierend auf einer Anzahl von Malen, die der Benutzer dem Benutzerattribut-Bucket zugewiesen wurde, zu bestimmen.

9. Computerimplementiertes Verfahren nach Anspruch 8, wobei die Client-Vorrichtung dazu konfiguriert ist, für jeden einer Vielzahl von Benutzerattribut-Buckets eine Vertrauensbewertung zu bestimmen, die ein Vertrauen in eine Vorhersage angibt, dass ein tatsächliches Benutzerattribut des Benutzers mit dem bestimmten Wert übereinstimmt oder innerhalb eines Wertebereichs liegt, der dem Benutzerattribut-Bucket entspricht, basierend zumindest teilweise auf dem Mitgliedschaftsmaß für den Benutzerattribut-Bucket.

10. Computerimplementiertes Verfahren nach Anspruch 8, wobei die Client-Vorrichtung eine bestimmte digitale Komponente auswählt, die dem Benutzer mindestens teilweise basierend auf dem Mitgliedschaftsmaß für jeden Benutzerattribut-Bucket angezeigt wird.

11. Computerimplementiertes Verfahren nach einem der vorhergehenden Ansprüche, wobei die Kontextdaten mindestens eines von groben Ortsinformationen der Client-Vorrichtung oder Daten, die eine Ressource identifizieren, mit der die gegebene digitale Komponente angezeigt wird, umfassen.

12. System, umfassend:
einen oder mehrere Prozessoren (310); und
eine oder mehrere Speichervorrichtungen (330), die Anweisungen speichern, die bei Ausführung durch den einen oder die mehreren Prozessoren den einen oder die mehreren Prozessoren veranlassen, das Verfahren nach einem der vorstehenden Ansprüche durchzuführen.

13. Computerlesbares Speichermedium, das Anweisungen enthält, die bei Ausführung durch den einen oder die mehreren Prozessoren den einen oder die mehreren Prozessoren veranlassen, das Verfahren nach einem der Ansprüche 1 bis 11 durchzuführen.

14. Computerprogrammprodukt, das Anweisungen umfasst, die bei Ausführung durch einen Computer den Computer veranlassen, die Schritte des Verfahrens nach einem der Ansprüche 1 bis 11 durchzuführen.

## Revendications

1. Procédé mis en œuvre par ordinateur, comprenant :
la réception (210), en provenance d'un dispositif client d'un utilisateur et par une plateforme de contenu, d'une requête de composant numérique qui demande à afficher un ou plusieurs composants numériques au niveau du dispositif client et qui comprend des données contextuelles liées à un environnement dans lequel le composant numérique sera affiché ;
l'affectation (215), par la plateforme de contenu et sur la base des données contextuelles, de l'utilisateur à un ou plusieurs groupes d'attribut d'utilisateur, dans lequel chacun des un ou plusieurs groupes d'attribut d'utilisateur est associé à au moins un type d'attribut d'utilisateur et correspondant à une valeur particulière ou à une plage de valeurs pour le type d'attribut d'utilisateur ;
la sélection (220), sur la base des données contextuelles et de chaque groupe d'attribut d'utilisateur auquel l'utilisateur est affecté, d'une pluralité de composants numériques candidats à distribuer au dispositif client ; et
la fourniture (225), par la plateforme de contenu et au dispositif client, de données de réponse de composant numérique qui initient une mise à jour, sur la base de chaque groupe d'attribut d'utilisateur auquel l'utilisateur est affecté, de données d'attribut d'utilisateur agrégées pour l'utilisateur stockées sur le dispositif client et dans lequel une application exécutée sur le dispositif client est configurée pour sélectionner, parmi la pluralité de composants numériques candidats, un composant numérique donné à afficher à l'utilisateur sur la base des données d'attribut d'utilisateur agrégées.

2. Procédé mis en œuvre par ordinateur selon la revendication 1, dans lequel les données de réponse de composant numérique comprennent, pour chaque groupe d'attribut d'utilisateur auquel l'utilisateur est affecté, un score de confiance qui indique une confiance dans une prédiction selon laquelle un attribut d'utilisateur réel de l'utilisateur correspond à la valeur particulière ou se situe dans une plage de valeurs correspondant au groupe d'attribut d'utilisateur.

3. Procédé mis en œuvre par ordinateur selon la revendication 1 ou 2, dans lequel les données d'attribut d'utilisateur agrégées pour l'utilisateur stockées sur le dispositif client comprennent des groupes d'attribut d'utilisateur auxquels l'utilisateur est affecté en réponse à une pluralité de requêtes de composants numériques et sur la base de données de réponse de composants numériques respectives reçues en réponse à la pluralité de requêtes de composants numériques.

4. Procédé mis en œuvre par ordinateur selon une quelconque revendication précédente, dans lequel les données de réponse de composant numérique comprennent un module logique de filtre qui comprend des instructions exécutables configurées pour produire un score de confiance qui indique une confiance dans une prédiction selon laquelle un attribut d'utilisateur réel de l'utilisateur correspond à la valeur particulière ou se situe dans une plage de valeurs correspondant au groupe d'attribut d'utilisateur.

5. Procédé mis en œuvre par ordinateur selon la revendication 4, dans lequel la logique de filtre traite les données d'attribut utilisateur agrégées au niveau du dispositif client pour produire un score de confiance respectif pour chacun d'une pluralité de groupes d'attribut utilisateur.

6. Procédé mis en œuvre par ordinateur selon une quelconque revendication précédente, dans lequel les données de réponse de composant numérique comprennent une référence à un module logique de filtre situé sur un système informatique distinct qui est configuré pour produire un score de confiance qui indique une confiance dans une prédiction selon laquelle un attribut d'utilisateur réel de l'utilisateur correspond à la valeur particulière ou se situe dans une plage de valeurs correspondant au groupe d'attribut d'utilisateur.

7. Procédé mis en œuvre par ordinateur selon la revendication 6, dans lequel la logique de filtre traite les données d'attribut utilisateur agrégées au niveau du dispositif client pour produire un score de confiance respectif pour chacun d'une pluralité de groupes d'attribut utilisateur.

8. Procédé mis en œuvre par ordinateur selon une quelconque revendication précédente, dans lequel le dispositif client est configuré pour déterminer, pour chacun d'une pluralité de groupes d'attribut d'utilisateur, une mesure d'appartenance sur la base d'un nombre de fois que l'utilisateur a été affecté au groupe d'attribut d'utilisateur.

9. Procédé mis en œuvre par ordinateur selon la revendication 8, dans lequel le dispositif client est configuré pour déterminer, pour chacun d'une pluralité de groupes d'attribut d'utilisateur, un score de confiance qui indique une confiance dans une prédiction selon laquelle un attribut d'utilisateur réel de l'utilisateur correspond à la valeur particulière ou se situe dans une plage de valeurs correspondant au groupe d'attribut d'utilisateur sur la base, au moins en partie, de la mesure d'appartenance pour le groupe d'attribut d'utilisateur.

10. Procédé mis en œuvre par ordinateur selon la revendication 8, dans lequel le dispositif client sélectionne un composant numérique donné à afficher à l'utilisateur sur la base, au moins en partie, de la mesure d'appartenance pour chaque groupe d'attribut d'utilisateur.

11. Procédé mis en œuvre par ordinateur selon une quelconque revendication précédente, dans lequel les données contextuelles comprennent au moins l'une d'informations de localisation grossière du dispositif client ou de données identifiant une ressource avec laquelle le composant numérique donné sera affiché.

12. Système comprenant :
un ou plusieurs processeurs (310) ; et
un ou plusieurs dispositifs de stockage (330) stockant des instructions qui, lorsqu'elles sont exécutées par l'un ou les plusieurs processeurs, amènent l'un ou les plusieurs processeurs à exécuter le procédé selon une quelconque revendication précédente.

13. Support lisible par ordinateur transportant des instructions qui, lorsqu'elles sont exécutées par un ou plusieurs processeurs, amènent les un ou plusieurs processeurs à exécuter le procédé selon l'une quelconque des revendications 1 à 11.

14. Produit de programme informatique comprenant des instructions qui, lorsqu'elles sont exécutées par un ordinateur, amènent l'ordinateur à exécuter les étapes du procédé selon l'une quelconque des revendications 1 à 11.
